# EUROPÄISCHE PATENTSCHRIFT

(11) **EP 2 024 726 B1**
(45) Veröffentlichungstag und Bekanntmachung des Hinweises auf die Patenterteilung: **26.10.2011**
(21) Anmeldenummer: 07725137.9
(22) Anmeldetag: 11.05.2007
(51) Int. Cl.: G01N 1/20

(54) **KOLBENSPRITZE ZUR ENTNAHME VON PROBEN IN EINER LEITUNG GEFÜHRTEN GASFÖRMIGEN ODER FLÜSSIGEN MEDIUMS**
PLUNGER SYRINGE FOR REMOVAL OF SAMPLES OF A GASEOUS OR LIQUID MEDIUM FED IN A PIPE
INJECTION À PISTON POUR LE PRÉLÈVEMENT D'ÉCHANTILLONS D'UN FLUIDE LIQUIDE OU GAZEUX INTRODUIT DANS UN CONDUIT

(30) Priorität: 12.05.2006 DE 102006022645
(43) Veröffentlichungstag der Anmeldung: 18.02.2009
(73) Patentinhaber: RITAG Ritterhuder Armaturen GmbH & Co. Armaturenwerk KG, 27711 Osterholz-Scharmbeck (DE)
(72) Erfinder: GELLWEILER, Thomas, 27711 Osterholz-Scharmbeck (DE)
(74) Vertreter: Ellberg, Nils
(86) Internationale Anmeldenummer: PCT/EP2007/004217
(87) Internationale Veröffentlichungsnummer: WO 2007/131734

(56) Entgegenhaltungen:
- GB-A- 2 301 579
- US-A- 4 580 452
- US-A- 5 146 792

## Beschreibung

### Beschreibung

Die Erfindung betrifft eine Kolbenspritze zur Entnahme von Proben eines in einer Leitung geführten gasförmigen oder flüssigen Mediums, mit einem Kolbengehäuse und einem im Kolbengehäuse gebildeten Aufnahmeraum für das Medium, wobei der Aufnahmeraum eine verschließbare Ventilöffnung zur Entnahme und/oder zur Zuführung des Mediums aus dem bzw. zum Aufnahmeraum aufweist und wobei das Volumen des Aufnahmeraums durch einen im Kolbengehäuse hin- und herbewegbaren Kolben veränderbar ist, gemäß dem Oberbegriff des Anspruchs 1.

Sogenannte Kolbenspritzen sind aus der Praxis zur Entnahme von Proben bekannt. Die Kolbenspritze ist vorgesehen zum Einbau in (Rohr-)Leitungen. Mit Hilfe der Kolbenspritze kann von dem in der Leitung geführten Medium eine Probe entnommen werden. Der Name Kolbenspritze rührt daher, dass diese Probenahmeeinrichtung im Wesentlichen an eine Spritze erinnert, also einen hin- und herbewegbaren Kolben aufweist, mit dem der Aufnahmeraum vergrößert und verkleinert werden kann.

Übliche Kolbenspritzen werden an eine Leitung angeschlossen; der Kolben wir zurückgezogen, um dem Aufnahmeraum ein definiertes Volumen zu geben und es wird ein Ventil geöffnet, so dass das in der Leitung geführte gasförmige bzw. flüssige Medium in den Aufnahmeraum gelangen kann.

Die Dokumente US-A-4580452, GB-A-2301579 und US-A-5146792 beschreiben solche Probenentnahmevorrichtungen aus dem Stand der Technik.

Um die entnommene Probe des Mediums zu lagern oder inspizieren zu können, ist es erforderlich, die Kolbenspritze von der Leitung zu trennen und diese zum Ort der weiteren Verwendung zu überführen. Insbesondere wenn es sich bei dem entnommenen Medium um einen umweltschädlichen oder giftigen Stoff handelt, ist es von Vorteil, wenn der Aufnahmeraum während des Transports verschlossen werden kann.

Hiervon ausgehend liegt der Erfindung die Aufgabe zugrunde, Kolbenspritzen der eingangs genannten Art weiterzuentwickeln.

Zur Lösung dieser Aufgabe weist die erfindungsgemäße Kolbenspritze die Merkmale des Anspruchs 1 auf. Es ist demnach vorgesehen, dass im Aufnahmeraum befindliches Medium durch den Kolben aus dem Aufnahmeraum herausförderbar ist, wobei im Bereich der Ventilöffnung eventuell verbleibender Rest des Mediums durch eine Ventilspindel zum Verschließen der Ventilöffnung aus dem Bereich der Ventilöffnung herausförderbar ist, derart, dass die Kolbenspritze im Wesentlichen weder im Bereich des Aufnahmeraums noch im Bereich der Ventilöffnung einen Totraum aufweist.

Unter Totraum ist der Bereich zu verstehen, in dem sich in der Regel ein Restvolumen des Mediums ansammelt, das selbst bei einer vollständigen Entleerung des Aufnahmeraums nicht entfernt werden kann. Das Vorhandensein eines solchen Totraums ist ungünstig, weil das in diesem Bereich verbleibende Medium bei der nächsten Probenahme die entnommene Probe "verunreinigen" kann. Zudem verhält es sich so, dass die Bereiche, in denen ein Totraum vorhanden ist, sich nicht durch Spülen reinigen lassen, so dass es zu Verschmutzungen kommen kann. ,

In einer bevorzugten Weiterbildung der Erfindung ist vorgesehen, dass die Ventilöffnung im Wesentlichen in einer Ebene einer Anschlussfläche des Kolbengehäuses angeordnet ist, mit der der Anschluss der Kolbenspritze an die mediumführende Leitung erfolgt. Dies führt dazu, dass auch im Prinzip auch außerhalb des Kolbengehäuses, also zwischen dem Kolbengehäuse und der Leitung kein "Totraum" gebildet ist. Auf diese Weise werden eventuelle Medienreste weitestgehend vermieden, die sonst nach dem Schließen des Ventils und Abnehmen der Kolbenspritze von der Leitung frei werden könnten.

Eine andere Weiterbildung der Erfindung sieht vor, dass der Kolben durch einen Spindelantrieb im Aufnahmeraum hin- und herbewegbar ist. Vorzugsweise weist der Spindelantrieb eine derartige Übersetzung auf, dass die Lage des Kolbens nicht durch den Druck eines in den Aufnahmeraum strömenden bzw. fließenden Mediums veränderbar ist. Auf diese Weise kann verhindert werden, dass nach. Anschluss der Kolbenspritze an eine Leitung, in der das Medium mit hohem Druck geführt wird, der Kolben nach Öffnung der Ventilöffnung ungewollt zurückgeschoben wird. Insbesondere bei sehr hohem Druck innerhalb der Rohrleitung ist es denkbar, dass dabei die Kolbenspritze beschädigt werden würde. Vorzugsweise weist der Spindelantrieb des Kolbens eine derart große Übersetzung auf, dass dieser selbsthemmend gegenüber dem in den Aufnahmeraum einströmenden bzw. einfließenden Medium ausgebildet ist.

In einer bevorzugten Ausführungsform ist vorgesehen, dass die Ventilspindel zum Schließen der Ventilöffnung unabhängig vom Kolben bewegbar bzw. betätigbar ist. Auf diese Weise kann unabhängig von der Position des Kolbens der Aufnahmeraum geöffnet oder geschlossen werden.

In einer besonders bevorzugten Ausgestaltung der Erfindung ist vorgesehen, dass der Aufnahmeraum in Richtung der Ventilöffnung in einen der Ventilöffnung vorgeordneten Ventilraum mündet, wobei zum Entleeren der Kolbenspritze das Medium durch den Kolben aus dem Aufnahmeraum herausförderbar ist und eventuell im Ventilraum befindliche Reste des Mediums durch die Ventilspindel aus der Kolbenspritze herausförderbar sind. Mit anderen Worten ist vorgesehen, dass mit Hilfe des Kolbens der Aufnahmeraum komplett entleert wird; damit sich zwischen dem Aufnahmeraum und der Ventilöffnung kein Totraum bildet ist vorgesehen, dass dieser Bereich durch die Ventilspindel geleert wird.

Weitere Einzelheiten der Erfindung sind den Unteransprüchen, der Beschreibung im Übrigen und der Zeichnung entnehmbar.

Ein bevorzugtes Ausführungsbeispiel der erfindungsgemäßen Kolbenspritze wird nachfolgend anhand der Zeichnung näher erläutert. In dieser zeigt:
- Fig. 1: eine Kolbenspritze in Seitenansicht,
- Fig. 2: eine Probenahmevorrichtung mit einer Kolbenspritze in einem Vertikalschnitt,
- Fig. 3: die Kolbenspritze gemäß Fig. 1 in einem Vertikalschnitt entlang Schnittlinie A-A in Fig. 1,
- Fig. 4: einen Schnitt durch die Kolbenspritze gemäß Linie B-B in Fig. 1,
- Fig. 5: einen Schnitt durch die Kolbenspritze gemäß Schnittlinie C-C in Fig. 1, und
- Fig. 6 bis Fig. 8: einen Vertikalschnitt durch die Kolbenspritze im Bereich eines Aufnahmeraums in vergrößerter Darstellung während verschiedener Phasen der Probenahme.

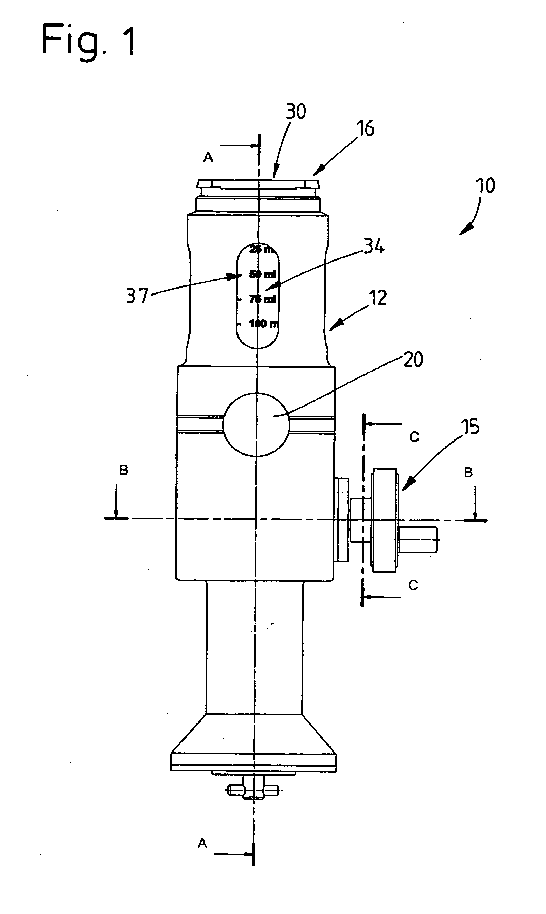

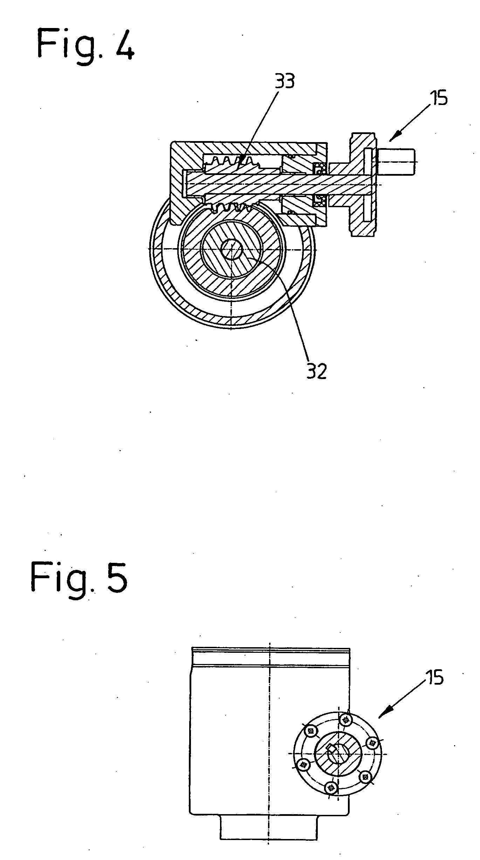

Die Fig. 1 - 8 zeigen eine Kolbenspritze 10 zur Entnahme von Proben eines gasförmigen oder flüssigen Mediums aus einer Leitung 11.

Die Kolbenspritze 10 verfügt über ein Kolbengehäuse 12 in dessen Inneren ein Aufnahmeraum 13 für die zu entnehmende Probe gebildet ist. Ferner ist im Aufnahmeraum 13 ein hin- und herbewegbarer Kolben 14 vorgesehen, mit dem sich das Volumen des Aufnahmeraums 13 verändern lässt. Zur Betätigung des Kolbens 14 ist außen am Kolbengehäuse 12 eine Betätigungseinrichtung 15 vorgesehen. Im gezeigten Ausführungsbeispiel ist dies in Art einer Kurbel ausgebildet, die sich gegen und im Uhrzeigersinn drehen lässt, um den Kolben 14 in längsaxialer Richtung zu verschieben.

Das Kolbengehäuse 12 weist im Bereich des Aufnahmeraums 13 wenigstens ein Anschlussmittel 16 auf, um das Kolbengehäuse 12 an der Leitung 11 zu befestigen. Die bzw. das Anschlussmittel 16 kann wie im vorliegen Fall als Bajonettverschluss ausgebildet sein.

Um das zu entnehmende Medium in den Aufnahmeraum 13 einführen zu können, weist das Kolbengehäuse 12 eine Ventilöffnung 17 auf, die durch eine bewegbare Ventilspindel 18 verschließbar ist.

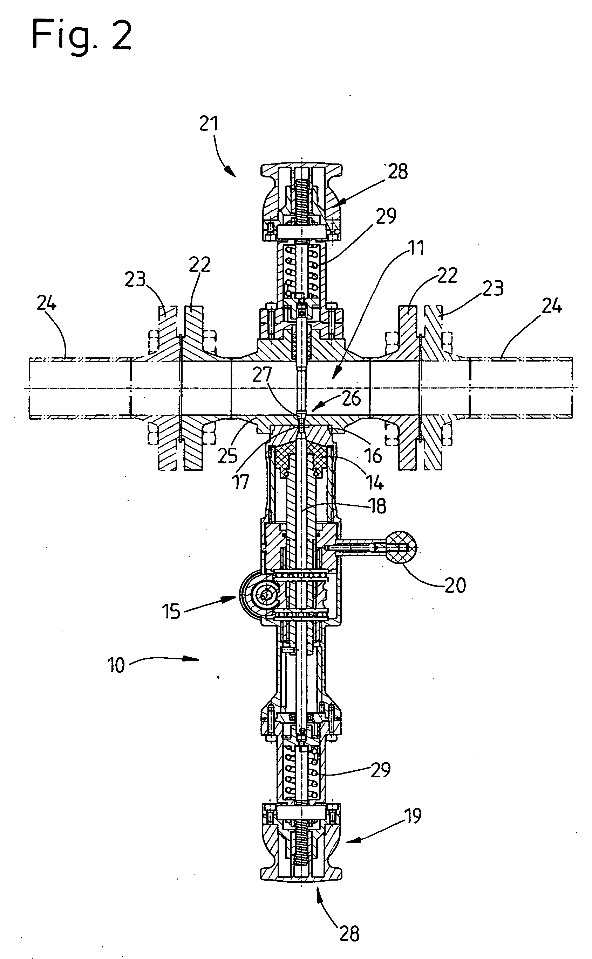

Die Ventilöffnung 17 ist im vorliegenden Fall im Bereich der Anschlussmittel 16 angeordnet. Am gegenüberliegenden Ende der Kolbenspritze 10 kann eine weitere Betätigungseinrichtung 19 vorgesehen sein, mit der die Ventilspindel 18 betätigbar ist (Fig. 2).

Das Kolbengehäuse 12 ist im vorliegenden Fall aus mehreren Teilen zusammengesetzt. Zu diesem Zweck ist eine Verriegelungseinrichtung 20 vorgesehen, um die verschiedenen Teile des Kolbengehäuses 12 aneinander zu arretieren.

Unter Bezugnahme auf Fig. 2 wird nachfolgend der Einbau der Kolbenspritze 10 in eine Leitung 11 erläutert:

Die Kolbenspritze 10 wird im vorliegenden Fall an einem Probenahmeventil 21 angeschlossen. Das Probenahmeventil 21 selbst ist im Bereich von seinen seitlichen Flanschen 22 an Flanschen 23 benachbarter Rohrleitungen 24 angeschlossen. Das Probenahmeventil 21 weist im Bereich einer Wandung 25 eine Ventilöffnung 26 auf, die durch eine Ventilspindel 27 verschließbar ist. Betätigt wird die Ventilspindel 27 über ein Handrad 28 als Betätigungseinrichtung. Durch Drehen des Handrades 28 ist die Ventilspindel 27 anhebbar zur Freigabe der Ventilöffnung 26. Dies geschieht unter Vorspannung einer dem Handrad 28 zugeordneten Feder 29, so dass bei Loslassen des Handrades 28 die Ventilöffnung 26 selbsttätig wieder durch die Ventilspindel 27 verschlossen wird.

Die Kolbenspritze 10 ist mit dem Bajonettverschluss derart an der Leitung 11 montierbar, dass die Ventilöffnung 17 der Kolbenspritze 10 direkt an der Ventilöffnung 26 in der Wandung 25 des Peobenahmeventils 21 positioniert ist, so dass bei Öffnung beider Ventilöffnungen 17, 26 das Medium aus der Leitung 11 in den Aufnahmeraum 13 der Kolbenspritze 10 gelangen kann.

Die Betätigung der Ventilspindel 18 der Kolbenspritze 10 kann in gleicher Weise erfolgen wie die der Ventilspindel 27 am Probenahmeventil 21. Fig. 2 zeigt hier einen entsprechenden Aufbau ebenfalls mit einer Feder 29, die dafür sorgt, dass bei Loslassen des Handrades 28 die Ventilspindel 18 die Ventilöffnung 17 wieder selbsttätig verschließt.

Alternativ zur Betätigung die Ventilspindele 18, 27 mit einem selbsttätig rückstellenden bzw. verschließenden Handrad 28 können auch andere Betätigungseinrichtungen zum Einsatz kommen. Denkbar sind beispielsweise auch Kurbelantriebe oder einfache nicht rückstellende Handräder. Trotzdem ist die in Fig. 2 gezeigte Lösung von besonderem Vorteil, weshalb für diese Anordnung auch ein eigenständiger Schutz in Frage kommt. Aus Gründen der Vereinfachung sind die bevorzugten Handräder in den Fig. 1, 3 - 8 nicht dargestellt.

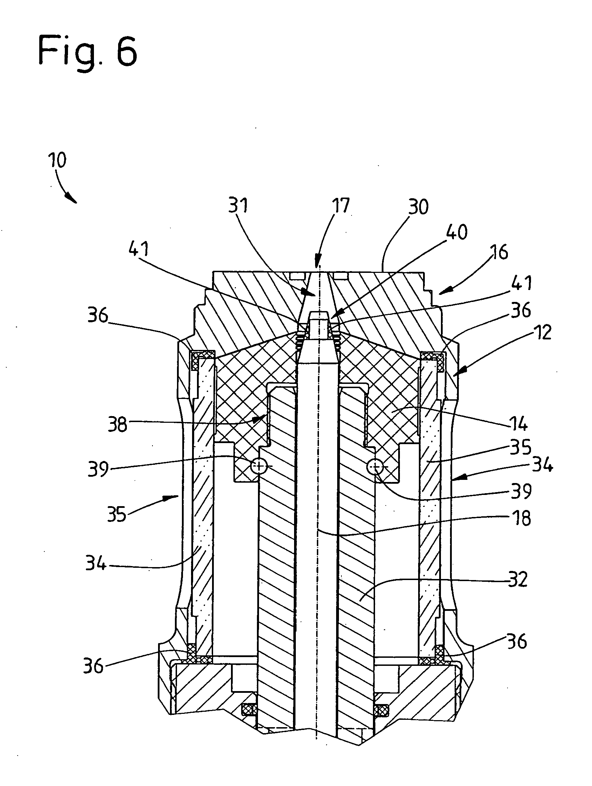

Unter Bezugnahme auf die Fig 6 - 8 wird nachfolgend der wesentliche Aufbau der Kolbenspritze 10 erläutert:

Im Bereich einer Oberseite der Kolbenspritze 10 ist das Kolbengehäuse 12 mit einer ebenen Anschlussfläche 30 versehen. Vorzugsweise etwa in der Mitte der Anschlussfläche 30 ist die Ventilöffnung 17 angeordnet. Die Kolbenspritze 10 kommt unter Anlage der Anschlussfläche 30 an der Wandung 25 des Probenahmeventils 21 zur Anlage, wenn die Kolbenspritze 10 mit dem Anschlussmittel 16 an demselben befestigt wird. Ausgehend von der Ventilöffnung 17 erstreckt sich ein Kanal zum Inneren des Kolbengehäuses 12, das die Ventilöffnung 17 mit dem Aufnahmeraum 13 verbindet. Dieser Kanal wird nachfolgend zur besseren Unterscheidung vom eigentlichen Aufnahmeraum als Ventilraum 31 bezeichnet. Der Ventilraum 31 mündet in den eigentlichen Aufnahmeraum 13, der durch das Kolbengehäuse 12 seitlich begrenzt wird.

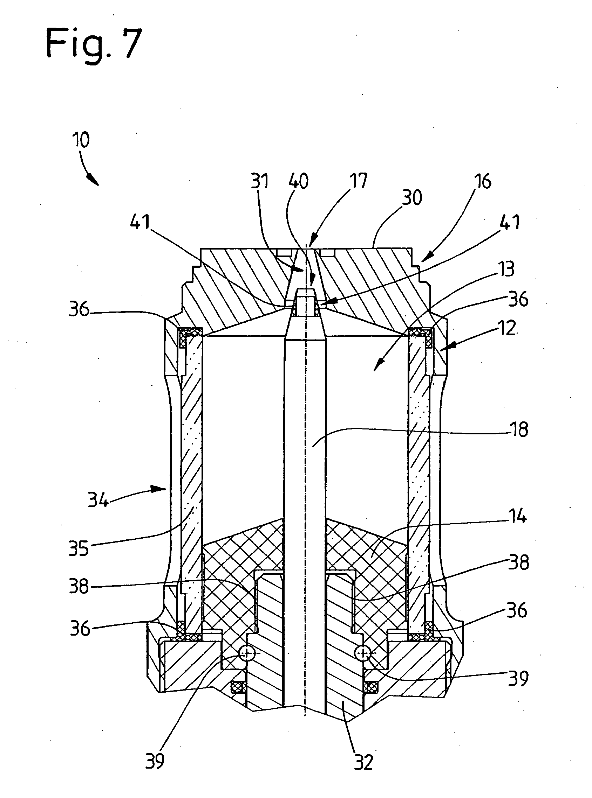

Der Kolben 14 ist im Aufnahmeraum 13 hin- und herbewegbar wie bei einer Spritze. In einer (vorderen) Endstellung liegt der Kolben 14 mit seinen vorderen und seitlichen Wandungen formschlüssig an den begrenzenden Wandungen des Aufnahmeraums 13 an, so dass der Aufnahmeraum 13 durch Verfahren des Kolbens 14 in dieser Stellung komplett bzw. im Wesentlichen komplett entleert werden kann (Fig. 6). Des Weiteren ist der Kolben wie in Fig. 7 gezeigt, in eine oder mehrere (hintere) Endstellungen bewegbar, in denen der Aufnahmeraum 13 je nach Stellung des Kolbens 14 ein gewisses Volumen aufweist. Entsprechend der Stellung des Kolbens 14 ist dann eine vorgegebene Menge des Mediums im Aufnahmeraum 13 aufnehmbar. Der Kolben ist an einer Spindel 32 gelagert und mit dieser wie bei einer Spritze hin- und herbewegbar. Für den Antrieb der Spindel 32 ist ein Spindelantrieb 33 vorgesehen, der mit der Betätigungseinrichtung 15 bzw. der Kurbel antreibbar ist. Der Spindelantrieb 33 ist mit der Spindel 32 gekoppelt, um diese in Längsrichtung der Kolbenspritze 10 hin- und herbewegen zu können.

Die Spindel 32 selbst ist an der Ventilspindel 18 gelagert, der im Wesentlichen das gesamte Kolbengehäuse 12 durchsetzt und der in der vorstehend beschriebenen Weise zum Verschließen und zum Freigeben der Ventilöffnung 17 in Längsrichtung der Kolbenspritze 10 hin- und herbewegbar ist.

Um die Stellung des Kolbens 14 im Aufnahmeraum 13 und das dadurch bestimmte Volumen des Aufnahmeraums 13 von außen erkennen zu können, weist das Kolbengehäuse 12 im Bereich des Aufnahmeraums 13 Öffnungen auf, die als Fenster 34 ausgebildet sind und die den Blick in das Innere des Aufnahmeraums 13 freigeben. Zu diesem Zweck kann der Aufnahmeraum 13 seitlich wenigstens im Bereich der Fenster 34 durch einen Glaszylinder 35 begrenzt sein. Der Glaszylinder 35 kann über Dichtungen 36 gegenüber dem Kolbengehäuse 12 abgedichtet sein. Um das Volumen des Aufnahmeraums 13 entsprechend der Stellung des Kolbens 14 für den Benutzer besser erkenntlich zu machen, kann im Bereich der Fenster 34 der Glaszylinder 35 mit einer Skala 37 mit Volumenangaben versehen sein. Bevorzugt hat der Aufnahmeraum ein maximales Volumen von etwa 100 ml.

Der Kolben 14 kann im gezeigten Ausführungsbeispiel über ein Innengewinde 38 an der Spindel 32 befestigt sein. Zusätzlich können Verriegelungsbolzen 39 vorgesehen sein, die den Kolben 14 an der Spindel 32 gegen unbeabsichtigtes Abdrehen sichern.

Der Aufnahmeraum 13 ist im vorliegenden Fall so ausgebildet, dass sich der Querschnitt zum Ventilraum 31 bzw. zur Ventilöffnung 17 hin konisch verjüngt. Der Aufnahmeraum 13 geht dann in den Ventilraum 31 über bzw. mündet in diesen, der sich ebenfalls in Richtung der Ventilöffnung 17 hin nochmals konisch verjüngt. Der Kolben 14 und die Spitze 40 der Ventilspindel 18 sind im Querschnitt korrespondierend zum Ventilraum 31 und Aufnahmeraum 13 ausgebildet, um diese komplett entleeren zu können. Die Ventilspindel 18 weist zudem im Bereich der Spitze 14 eine umlaufende Dichtung 41 auf, um den Ventilraum 31 und die Ventilöffnung 17 sicher zu verschließen.

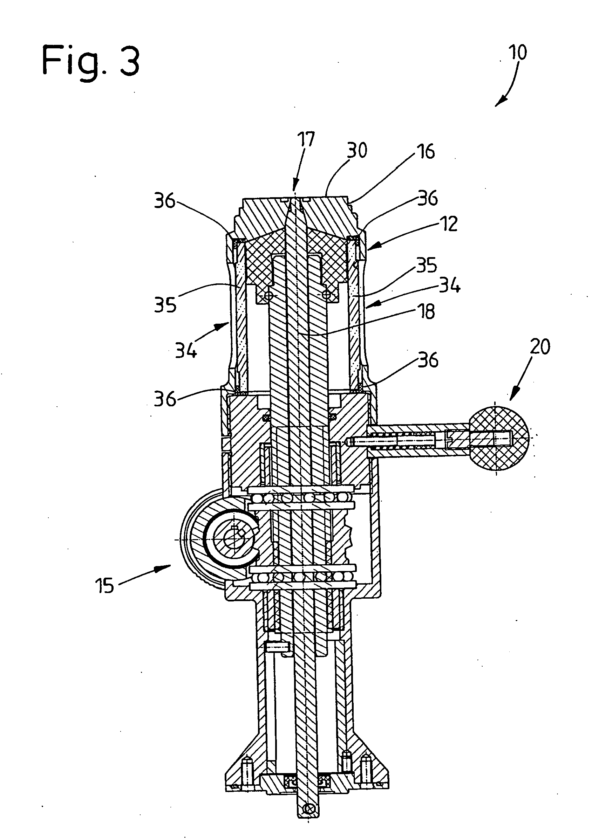

Die Funktionsweise der Kolbenspritze 10 wird nachfolgend anhand der Fig. 3, 6 - 8 wie folgt erläutert:

Die Kolbenspritze 10 wird zunächst wie in Fig. 2 gezeigt, an der Wandung 25 des Probenahmeventils 21 montiert. Dabei befinden sich die Ventilspindel 18 und der Kolben 14 in der in Fig. 3 gezeigten vorderen Endstellung. Als Nächstes wird wie in Fig. 7 ersichtlich der Kolben 14 in eine hintere Endstellung bewegt. Dies erfolgt mittels der als Handrad ausgebildeten Betätigungseinrichtung 15, bis das gewünschte Volumen des Aufnahmeraums 13 eingestellt ist. Das Volumen kann näherungsweise bzw. ausreichend genau mit Hilfe der Skala 37 abgelesen werden. Nachfolgend wird wie in Fig. 6 dargestellt die Ventilöffnung 17 durch Zurückbewegen der Ventilspindel 18 geöffnet. Dies kann beispielsweise mit dem Handrad 28 wie in Fig. 2 gezeigt erfolgen. Als Nächstes wird die Ventilöffnung 26 in der Leitung 11 durch Betätigung des oberen Handrades 28 geöffnet (Fig. 2). Jetzt kann das in der Leitung 11 geführte Medium in den Aufnahmeraum 13 der Kolbenspritze 10 einströmen bzw. einfließen. Sollte jetzt eventuell gesundheitsgefährdendes Medium durch beispielsweise einen fehlerhaften Anschluss der Kolbenspritze 10 am Probenahmeventil 21 freigesetzt werden und die Gesundheit des Bedieners beeinträchtigen, führt dies in der Regel dazu, dass der Bediener wenigstens eines, wahrscheinlich aber beide Handräder 28, loslässt, was somit automatisch zum Verschließen der Ventilöffnungen 17 und/oder 26 führt, so dass kein weiteres Medium mehr freigesetzt werden kann.

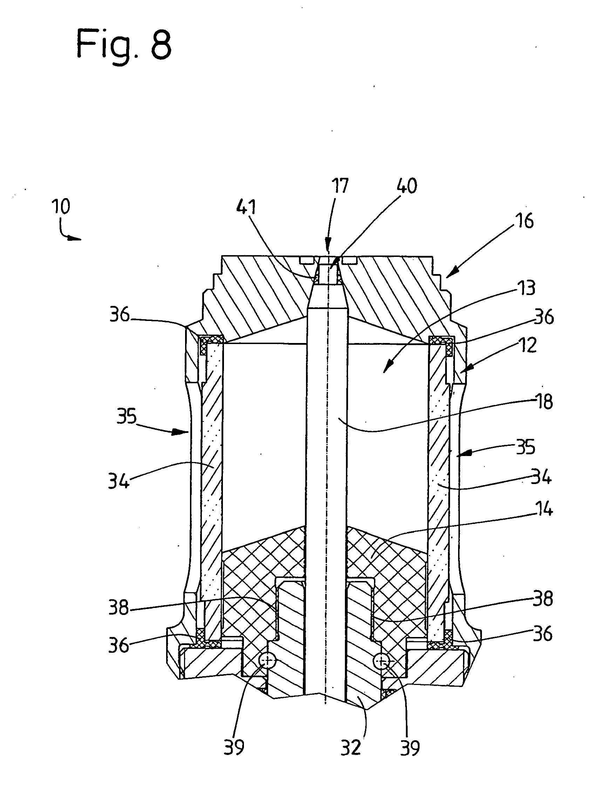

Nachdem der Aufnahmeraum 13 mit dem Medium gefüllt ist, wird die Ventilöffnung 17 der Kolbenspritze 10 wieder mit der Ventilspindel 18 verschlossen (Fig. 8).

In dieser Stellung kann die Kolbenspritze 10 vom Probenahmeventil 21 getrennt werden, nachdem auch die Ventilöffnung 26 im Probenahmeventil 21 verschlossen wurde. Die Kolbenspritze 10 kann jetzt mit dem entnommenen Medium zur weiteren Prüfung oder Lagerung verbracht werden, ohne dass die Gefahr besteht, dass das Medium aus dem Aufnahmeraum 13 austritt.

Eine Besonderheit der Kolbenspritze 10 ergibt beim nachfolgenden Entleeren der Kolbenspritze 10. Dies erfolgt ausgehend von der in Fig. 8 gezeigten geschlossenen Stellung dadurch, dass zunächst wie in Fig. 7 gezeigt, die Ventilöffnung 17 freigegeben wird und danach der Kolben 14 mit der Betätigungseinrichtung 15 in die vordere Endstellung gemäß Fig. 6 bewegt wird. Durch die allseits dichtende Anlage des Kolbens 14 an den Wandungen des Aufnahmeraums 13 wird das Medium durch den Kolben 14 aus dem Aufnahmeraum 13 herausgefördert, und zwar in Richtung des Ventilraums 31 und durch die Ventilöffnung 17 hindurch. Aus Fig. 6 ist ersichtlich, dass in der vorderen Endstellung des Kolbens 14 der Aufnahmeraum 13 komplett durch den Kolben 14 geleert wird, so dass keine bzw. im Wesentlichen keine Rückstände des Mediums im Aufnahmeraum 13 verbleiben. Im nächsten Schritt wird die Ventilspindel 18 von der in Fig. 6 gezeigten Stellung in die in Fig. 8 gezeigte Stellung bewegt. Dabei wird eventuell im Ventilraum 31 noch vorhandenes Medium durch die Ventilspindel 18 aus der Kolbenspritze 10 herausgefördert, so dass auch in diesem Bereich keine oder im Wesentlichen keine Rückstände des Mediums verbleiben können. Auf diese Weise ist die Kolbenspritze 10 in diesen Bereichen quasi totraumfrei ausgebildet.

Weiterhin ist als Besonderheit vorgesehen, dass der Spindelantrieb 33 als Schneckengetriebe ausgebildet ist und eine derartige Übersetzung aufweist, dass der Kolben 14 selbsthemmend im Aufnahmeraum 13 gelagert ist. Die Übersetzung des Schneckengetriebes ist derart groß gewählt, dass der Kolben 14 insbesondere nicht durch den Druck des in den Aufnahmeraum 13 einfließenden bzw. einströmenden Mediums verschoben werden kann. Auf diese Weise ist gewährleistet, dass das Volumen des Aufnahmeraums 13 nicht ungewollt vergrößert wird, und dass die Kolbenspritze 10 im Extremfall keinen Schaden nimmt.

Als weitere Besonderheit ist die Betätigung der gesamten Probenahmevorrichtung durch die selbsttätig schließenden Handräder 28 zu sehen, die ein wesentliches Sicherheitsmerkmal darstellen. Sollte auf Grund von austretenden gesundheitsgefährdenden Medien der Bediener nicht mehr in Lage sein die Bedienung der Probenahmevorrichtung zu steuern, verriegelt sich die gesamte Apparatur nach Loslassen der Handräder 28 selbsttätig.

Es versteht sich, dass die im vorliegenden Fall anhand eines Ausführungsbeispiels beschriebene Erfindung nicht in allen Details verwirklicht sein muss. Beispielsweise kann von der Geometrie des Aufnahmeraums 13 und des Ventilraums 31 abgewichen werden, sofern sichergestellt ist, dass die jeweiligen Räume durch die unabhängig voneinander betätigbaren Kolben 14 einerseits und Ventilspindel 18 andererseits komplett entleert werden können, so dass innerhalb der Kolbenspritze 10 kein oder zumindest kein nennenswerter Totraum vorhanden ist.
- 10: Kolbenspritze
- 11: Leitung
- 12: Kolbengehäuse
- 13: Aufnahmeraum
- 14: Kolben
- 15: Betätigungseinrichtung
- 16: Anschlussmittel
- 17: Ventilöffnung
- 18: Ventilspindel
- 19: Betätigungseinrichtung
- 20: Verriegelungseinrichtung
- 21: Probenahmeventil
- 22: Flansch
- 23: Flansch
- 24: Rohrleitung
- 25: Wandung
- 26: Ventilöffnung
- 27: Ventilspindel
- 28: Handrad
- 29: Feder
- 30: Anschlussfläche
- 31: Ventilraum
- 32: Spindel
- 33: Spindelantrieb
- 34: Fenster
- 35: Glaszylinder
- 36: Dichtung
- 37: Skala
- 38: Innengewinde
- 39: Verriegelungsbolzen
- 40: Spitze
- 41: Dichtung

## Patentansprüche

1. Kolbenspritze zur Entnahme von Proben eines in einer Leitung (11) geführten gasförmigen oder flüssigen Mediums, mit einem Kolbengehäuse (12) und einem im Kolbengehäuse (12) gebildeten Aufnahmeraum (13) für das Medium, wobei der Aufnahmeraum (13) eine verschließbare Ventilöffnung (17) zur Entnahme und/oder zur Zuführung des Mediums aus dem bzw. zum Aufnahmeraum (13) aufweist und wobei das Volumen des Aufnahmeraums (13) durch einen im Kolbengehäuse (12) hin- und herbewegbaren Kolben (14) veränderbar ist, **dadurch gekennzeichnet, dass** im Aufnahmeraum (13) befindliches Medium durch den Kolben (14) aus dem Aufnahmeraum (13) herausförderbar ist, wobei im Bereich der Ventilöffnung (17) verbleibende Reste des Mediums durch eine Ventilspindel (18) zum Verschließen der Ventilöffnung (17) aus dem Bereich der Ventilöffnung (17) herausförderbar sind, derart, dass die Kolbenspritze (10) im Wesentlichen weder im Bereich des Aufnahmeraums (13) noch im Bereich der Ventilöffnung (17) einen Totraum aufweist.

2. Kolbenspritze nach einem der vorhergehenden Ansprüche, **dadurch gekennzeichnet, dass** die Ventilöffnung (17) im Wesentlichen in der Ebene einer Anschlussfläche (30) des Kolbengehäuses (12) angeordnet ist, zum Anschluss der Kolbenspritze (10) an die medienführende Leitung (11).

3. Kolbenspritze nach einem der vorhergehenden Ansprüche, **dadurch gekennzeichnet, dass** die der Kolben (14) durch einen Spindelantrieb (33) in längsaxialer Richtung des Aufnahmeraums (13) hin- und herbewegbar ist,

4. Kolbenspritze nach einem der vorhergehenden Ansprüche, **dadurch gekennzeichnet, dass** der Spindelantrieb (33) eine derartige Übersetzung aufweist, dass die Lage des Kolbens (14) nicht durch den Druck eines in den Aufnahmeraum (13) strömenden Mediums veränderbar ist.

5. Kolbenspritze nach einem der vorhergehenden Ansprüche, **dadurch gekennzeichnet, dass** der Spindelantrieb (33) des Kolbens (14) eine derart große Übersetzung aufweist, dass der Spindelantrieb (33) selbsthemmend gegenüber in den Aufnahmeraum (13) einströmendes Medium ausgebildet ist.

6. Kolbenspritze nach einem der vorhergehenden Ansprüche, **dadurch gekennzeichnet, dass** die Ventilspindel (18) vorzugsweise zentrisch im Kolbengehäuse (12) positioniert ist.

7. Kolbenspritze nach einem der vorhergehenden Ansprüche, **dadurch gekennzeichnet, dass** die Ventilspindel (18) zum Verschließen der Ventilöffnung (17) unabhängig vom Kolben (14) im Aufnahmeraum (13) bewegbar ist.

8. Kolbenspritze nach einem der vorhergehenden Ansprüche, **dadurch gekennzeichnet, dass** die Ventilspindel (18) durch ein Handrad (28) betätigbar ist, das an einem der Ventilöffnung (17) gegenüberliegendem Ende des Kolbengehäuses (12) angeordnet ist.

9. Kolbenspritze nach einem der vorhergehenden Ansprüche, **dadurch gekennzeichnet, dass** der Aufnahmeraum (13) in Richtung der Ventilöffnung (17) in einen der Ventilöffnung (17) vorgeordneten Ventilraum (31) mündet, wobei zum Entleeren der Kolbenspritze (10) das Medium durch den Kolben (14) aus dem Aufnahmeraum (13) herausförderbar ist und eventuell im Ventilraum (31) befindliche Reste des Mediums durch die Ventilspindel (18) aus dem Ventilraum (31) herausförderbar sind.

10. Kolbenspritze nach einem der vorhergehenden Ansprüche, **dadurch gekennzeichnet, dass** zum Befüllen des Aufnahmeraums (13) der Kolben (14) durch den Spindelantrieb (33) von der Ventilöffnung (17) wegbewegbar ist zur Öffnung des Aufnahmeraums (13) auf ein vorggebbares Volumen und dass die Ventilöffnung (17) durch Betätigung der Ventilspindel (18) zu öffnen ist um Medium in den Aufnahmeraum einströmen zu lassen.

11. Kolbenspritze nach einem der vorhergehenden Ansprüche, **dadurch gekennzeichnet, dass** zum Entleeren des Aufnahmeraums (13) der Kolben (14) durch den Spindelantrieb (33) in Richtung der Ventilöffnung (17) bewegbar ist zur Verringerung des Volumens des Aufnahmeraums (13) und zum Herausdrücken des Mediums aus demselben und dass die Ventilöffnung (17) durch Betätigung der Ventilspindel (18) zu schließen ist, um restliches Medium im Ventilraum (31) durch die Ventilöffnung (17) herauszudrücken.

## Claims

1. Plunger syringe for removal of samples of a gaseous or liquid medium fed in a pipe (11), with a plunger housing (12), and with a receiving chamber (13) provided for the medium and formed in the plunger housing (12), the receiving chamber (13) having a sealable valve opening (17) for removal of the medium from and/or delivery of the medium to the receiving chamber (13), and the volume of the receiving chamber (13) being able to be changed by a plunger (14) movable to and fro in the plunger housing (12), **characterized in that** medium located in the receiving chamber (13) can be driven out of the receiving chamber (13) by the plunger (14), and residues of the medium remaining in the area of the valve opening (17) can be driven out of the area of the valve opening (17) by a valve spindle (18) for closing the valve opening (17), in such a way that the plunger syringe (10) has substantially no dead volume either in the area of the receiving chamber (13) or in the area of the valve opening (17).

2. Plunger syringe according to Claim 1, **characterized in that** the valve opening (17) is arranged substantially in the plane of an attachment face (30) of the plunger housing (12) for attaching the plunger syringe (10) to the pipe (11) carrying the medium.

3. Plunger syringe according to one of the preceding claims, **characterized in that** the plunger (14) can be moved to and fro in the longitudinal direction of the receiving chamber (13) by a spindle drive (33).

4. Plunger syringe according to one of the preceding claims, **characterized in that** the spindle drive (33) has such a gear ratio that the position of the plunger (14) cannot be changed by the pressure of a medium flowing into the receiving chamber (13).

5. Plunger syringe according to one of the preceding claims, **characterized in that** the spindle drive (33) of the plunger (14) has such a high gear ratio that the spindle drive (33) is designed to be self-locking with respect to medium flowing into the receiving chamber (13).

6. Plunger syringe according to one of the preceding claims, **characterized in that** the valve spindle (18) is preferably positioned centrally in the plunger housing (12).

7. Plunger syringe according to one of the preceding claims, **characterized in that** the valve spindle (18) for closing the valve opening (17) is movable independently of the plunger (14) in the receiving chamber (13).

8. Plunger syringe according to one of the preceding claims, **characterized in that** the valve spindle (18) can be actuated by a handwheel (28), which is arranged on an end of the plunger housing (12) opposite the valve opening (17).

9. Plunger syringe according to one of the preceding claims, **characterized in that** the receiving chamber (13) opens, in the direction of the valve opening (17), into a valve chamber (31) arranged in front of the valve opening (17), and, in order to empty the plunger syringe (10), the medium can be driven out of the receiving chamber (13) by the plunger (14), and any residues of the medium located in the valve chamber (31) can be driven out of the valve chamber (31) by the valve spindle (18).

10. Plunger syringe according to one of the preceding claims, **characterized in that**, in order to fill the receiving chamber (13), the plunger (14) can be moved away from the valve opening (17) by the spindle drive (33) so as to open the receiving chamber (13) to a predeterminable volume, and **in that** the valve opening (17) is to be opened by actuation of the valve spindle (18) in order to allow medium to flow into the receiving chamber.

11. Plunger syringe according to one of the preceding claims, **characterized in that**, in order to empty the receiving chamber (13), the plunger (14) can be moved in the direction of the valve opening (17) by the spindle drive (33) so as to reduce the volume of the receiving chamber (13) and force the medium out of the latter, and **in that** the valve opening (17) is to be closed by actuation of the valve spindle (18) in order to force residual medium in the valve chamber (31) out through the valve opening (17).

## Revendications

1. Seringue de piston pour le prélèvement d'échantillons d'un fluide gazeux ou liquide guidé dans une conduite (11), comprenant un corps de piston (12) et un espace de réception (13) pour le fluide formé dans le corps de piston (12), l'espace de réception (13) présentant une ouverture de soupape refermable (17) pour le prélèvement et/ou pour l'acheminement du fluide hors de ou vers l'espace de réception (13), et le volume de l'espace de réception (13) pouvant être modifié par un piston (14) pouvant être déplacé en va-et-vient dans le corps de piston (12), **caractérisée en ce que** du fluide se trouvant dans l'espace de réception (13) peut être refoulé par le piston (14) hors de l'espace de réception (13), les restes de fluide subsistant dans la région de l'ouverture de soupape (17) pouvant être refoulés par une tige de soupape (18) pour fermer l'ouverture de soupape (17) hors de la région de l'ouverture de soupape (17), de telle sorte que la seringue de piston (10) ne présente substantiellement aucun espace mort, ni dans la région de l'espace de réception (13), ni dans la région de l'ouverture de soupape (17).

2. Seringue de piston selon la revendication 1, **caractérisée en ce que** l'ouverture de soupape (17) est disposée sensiblement dans le plan d'une surface de raccordement (30) du corps de piston (12), pour le raccordement de la seringue de piston (10) à la conduite (11) conduisant les fluides.

3. Seringue de piston selon l'une quelconque des revendications précédentes, **caractérisée en ce que** le piston (14) peut être déplacé en va-et-vient par un entraînement à broche (33) dans la direction axiale longitudinale de l'espace de réception (13).

4. Seringue de piston selon l'une quelconque des revendications précédentes, **caractérisée en ce que** l'entraînement à broche (33) présente une transmission telle que la position du piston (14) ne puisse pas être modifiée par la pression d'un fluide s'écoulant dans l'espace de réception (13).

5. Seringue de piston selon l'une quelconque des revendications précédentes, **caractérisée en ce que** l'entraînement à broche (33) du piston (14) présente une transmission suffisamment grande pour que l'entraînement à broche (33) soit réalisé de manière autobloquante par rapport au fluide affluant dans l'espace de réception (13).

6. Seringue de piston selon l'une quelconque des revendications précédentes, **caractérisée en ce que** la tige de soupape (18) est positionnée de préférence centralement dans le corps de piston (12).

7. Seringue de piston selon l'une quelconque des revendications précédentes, **caractérisée en ce que** la tige de soupape (18) peut être déplacée dans l'espace de réception (13) pour la fermeture de l'ouverture de soupape (17) indépendamment du piston (14).

8. Seringue de piston selon l'une quelconque des revendications précédentes, **caractérisée en ce que** la tige de soupape (18) peut être actionnée par une roue à main (28) qui est disposée à une extrémité du corps de piston (12) opposée à l'ouverture de soupape (17).

9. Seringue de piston selon l'une quelconque des revendications précédentes, **caractérisée en ce que** l'espace de réception (13) débouche dans la direction de l'ouverture de soupape (17) dans un espace de soupape (31) disposé en amont de l'ouverture de soupape (17), le fluide, pouvant être refoulé pour la vidange de la seringue de piston (10) à travers le piston (14) hors de l'espace de réception (13), et les restes de fluide se trouvant éventuellement dans l'espace de soupape (31) pouvant être refoulés par la tige de soupape (18) hors de l'espace de soupape (31).

10. Seringue de piston selon l'une quelconque des revendications précédentes, **caractérisée en ce que** pour le remplissage de l'espace de réception (13), le piston (14) peut être déplacé à l'écart de l'ouverture de soupape (17) par l'entraînement à broche (33), pour ouvrir l'espace de réception (13) jusqu'à un volume prédéfinissable, et **en ce que** l'ouverture de soupape (17) peut être ouverte par actionnement de la tige de soupape (18) afin de permettre l'afflux de fluide dans l'espace de réception.

11. Seringue de piston selon l'une quelconque des revendications précédentes, **caractérisée en ce que** pour la vidange de l'espace de réception (13), le piston (14) peut être déplacé par l'entraînement à broche (33) dans la direction de l'ouverture de soupape (17) pour réduire le volume de l'espace de réception (13) et pour repousser le fluide hors de celui-ci, et **en ce que** l'ouverture de soupape (17) peut être fermée par actionnement de la tige de soupape (18) pour repousser le fluide restant dans l'espace de soupape (31) à travers l'ouverture de soupape (17).
